# EUROPÄISCHE PATENTANMELDUNG

(11) **EP 2 500 588 A1**
(43) Veröffentlichungstag der Anmeldung: **19.09.2012**
(21) Anmeldenummer: 12159252.1
(22) Anmeldetag: 13.03.2012
(51) Int. Cl.: F16C 3/02, F16C 35/04, F16C 35/06, B29C 70/32, F03D 11/00

(54) **Lagerkonzept mit Wickelrohren**

(30) Priorität: 14.03.2011 DE 102011005498
(71) Anmelder: Aktiebolaget SKF, 41 550 Göteborg (SE)
(72) Erfinder: Götz, Johannes, 97520 Röthlein (DE); Herbst, Hubert, 97503 Gädheim (DE); Menig, Fred, 97717 Sulzthal (DE)
(74) Vertreter: Schonecke, Mitja

(57) **Zusammenfassung**

Ausführungsbeispiele der vorliegenden Erfindung betreffen eine Lagervorrichtung (10; 20; 30; 50; 60; 70; 80), insbesondere für eine Windkraftanlage, umfassend ein aus einem ersten Wickelrohr (11) mit einem ersten Durchmesser gebildetes Lagergehäuse, eine aus einem zweiten Wickelrohr (12) mit einem zweiten Durchmesser gebildete Welle, wobei der zweite Durchmesser geringer ist als der erste Durchmesser, so dass die Welle (12) in das Lagergehäuse (11) eingebracht werden kann, eine Lageranordnung (13) zwischen Welle und Lagergehäuse, die ausgebildet ist, um die Welle in dem Lagergehäuse drehbar zu lagern.

## Beschreibung

Die Erfindung betrifft ein Lagerkonzept, insbesondere für Windkraftanlagen, bei dem als Lagergehäuse und Welle jeweils Wickelrohre zum Einsatz kommen.

Wickelrohre aus thermoplastischen Werkstoffen, wie z. B. Polyethylen (PE) oder Polypropylen (PP), sind vorwiegend aus dem Apparate- und Behälterbau, sowie aus der Lüftungstechnik bekannt. Die Herstellung von Wickelrohren erfolgt in einem genormten Wickelverfahren. Dabei wird ein homogenes plastifiziertes Band spiralförmig und überlappend auf einen Wickeldorn (auch Wickeltrommel genannt) gewickelt und durch die Überlappungen miteinander verbunden. Mittels des festen Wickeldorns ist ein gleichbleibender Innendurchmesser auch bei unterschiedlichen Wanddicken bzw. Beanspruchungen der Wickelrohre möglich. Die Wanddicken und Abstufungen können individuell nach Betriebsbedingungen ausgelegt und gefertigt werden.

Um speziellen Anforderungen gerecht zu werden, existieren auch Verbundwerkstoffrohre, welche aus einem Verbund wenigstens zweier Werkstoffe hergestellt werden können, wie z. B. thermoplastischer und duroplastischer Werkstoffe. Thermoplastische Werkstoffe, wie z. B. Polyethylen (PE) oder Polypropylen (PP), sind meistens recht beständig gegenüber vielen Chemikalien. Darüber hinaus wohnen ihnen meist gute Abrasionseigenschaften inne. Duroplastische Werkstoffe, wie beispielsweise glasfaserverstärkter (GFK) oder kohlefaserverstärkter Kunststoff (CKF), zeichnen sich vor allem durch gute Festigkeitseigenschaften aus, so dass sie beispielsweise gut als stabilisierender Außenmantel eines Verbundwerkstoffrohrs eingesetzt werden können.

Bei GFK-Wickelrohren werden die Komponenten Harz, Quarzsand, Glas (als Kurfasern) und Glasroving (ein Glasfaden) auf einer vollautomatischen Wickelmaschine dosiert und auf einen Kern, den Wickeldorn, aufgetragen bzw. aufgewickelt. Über die Dosierung der Mengen erfolgt der Aufbau der Wand- bzw. Mantelstärke. Bei CFK-Wickelrohren verhält es sich, abgesehen von den Komponenten, grundsätzlich ähnlich. GFK- und CFK-Wickelrohre gelten im Allgemeinen auch als sehr korrosionsbeständig.

Ein Problem aus dem Bereich der Lagertechnik besteht darin, dass es so gut wie keine Lagersystemlösungen auf dem Markt gibt. Bisher werden Gehäuse, Welle, Lager, Flansch, etc., von jeweiligen Herstellern einzeln geliefert und müssen von einem Nutzer zu einem kompletten Lagersystem montiert werden. Des Weiteren besteht Korrosionsgefahr bei einzelnen Bauteilen, die oft metallischer Natur sind. Werden die einzelnen Lagerkomponenten nicht richtig montiert, kann es außerdem zu einem verstärkten Auftreten von Schwingungen, Vibrationen und/oder Geräuschen kommen, insbesondere bei auf die Lagerkomponenten wirkenden Windlasten.

Aus dem Stand der Technik sind keine befriedigenden Lösungen des oben beschriebenen Montageproblems bekannt. Korrosion von Lager bzw. Lagergehäuse und Umbauteilen wird mit üblichen Mitteln, wie beispielsweise Beschichtung, begegnet. Schwingungen und Vibrationen können mit Aussteifungen und verschiedenen Versionen von Abkopplungen begegnet werden.

Daher besteht eine Aufgabe der vorliegenden Erfindung darin, ein Lagersystem, insbesondere für Windkraftanlagen, bereitzustellen, welches die oben beschriebenen Nachteile überwindet.

Dazu sehen Ausführungsbeispiele der vorliegenden Erfindung ein bereits vom Hersteller des Lagersystems - je nach Nutzeranforderungen - fertig konfiguriertes bzw. montiertes Lagersystem vor. Als Kernkomponenten eines derartigen Lagersystems kommen dabei Wickelrohre, vorzugsweise aus GFK bzw. CFK zum Einsatz. Für ein Lagergehäuse wird ein Wickelrohr mit einem größeren Durchmesser gewählt als für ein als Welle fungierendes Wickelrohr. Da Welle und Lagergehäuse relativ zueinander drehbar sein sollen, ist zwischen den beiden Wickelrohren auch eine Lageranordnung vorgesehen. Komponenten dieser Lageranordnung zwischen gewickelter Welle und gewickeltem Lagergehäuse, wie z. B. Laufringe, können bereits in der Fertigung an den Wickelrohren angebracht werden. Beide (bestückte) Wickelrohre können dann einfach einander geschoben werden, um ein fertiges Lagersystem gemäß Ausführungsbeispielen zu erhalten.

Ausführungsbeispiele der vorliegenden Erfindung sehen eine Lagervorrichtung vor, insbesondere für eine Windkraftanlage, umfassend ein aus einem ersten Wickelrohr mit einem ersten Durchmesser gebildetes Lagergehäuse, eine aus einem zweiten Wickelrohr mit einem zweiten Durchmesser gebildete Welle, wobei der zweite Durchmesser geringer ist als der erste Durchmesser, so dass die Welle in das Lagergehäuse eingebracht werden kann. Zwischen der Welle und dem Lagergehäuse ist eine Lageranordnung vorgesehen, die ausgebildet ist, um die Welle und das Lagergehäuse drehbar zueinander zu lagern. Das erste Wickelrohr bildet somit quasi eine Lagerbuchse zur Aufnahme der durch das zweite Wickelrohr gebildeten Welle.

Insbesondere kann sowohl das erste als auch das zweite Wickelrohr aus einem Faserverbund hergestellt werden, so dass es sich bei dem ersten und/oder dem zweiten Wickelrohr jeweils um ein Faserverbundrohr handelt, welches einen glasfaser-(GFK) und/oder kohlefaserverstärkten Kunststoff (CFK) umfassen kann. Je nach Ausführung können die GFK- bzw. CFK-Rohre durch ihre Komponentenzusammensetzung so ausgelegt werden, dass sie einen bestimmten Einsatzzweck erfüllen können. Insbesondere bei Kleinwindanlagen kann es erforderlich sein, dass die Wickelrohre zum einen hohen mechanischen Belastungen standhalten, und zum anderen auch korrosionsbeständig sind, insbesondere beim Einsatz in Küstenregionen mit salzhaltiger Umgebung.

Bei Ausführungsbeispielen kann die Lageranordnung zwischen der Welle und dem Lagergehäuse als eine Gleit- oder als eine Wälzlageranordnung ausgebildet sein, wobei eine äußere Mantelfläche der Welle bzw. eine innere Mantelfläche des Lagergehäuses dabei jeweils nicht direkt als Gleit- oder Lauffläche für Wälzkörper dienen. Stattdessen sind dafür explizit Gleit - und/oder Laufringe auf der gewickelten Welle und/oder in dem gewickelten Lagergehäuse vorgesehen. D. h., die Oberflächen des ersten und des zweiten Wickelrohrs werden nicht selbst als Gleit- und/oder Laufflächen verwendet, sondern vielmehr wird dazu die Lageranordnung aus dedizierten Lagermaterialien, wie z. B. gehärtetem Stahl, eingesetzt.

Um die Gleit- oder Wälzlageranordnung zwischen der durch das zweite Wickelrohr gebildeten Welle und dem durch das erste Wickelrohr gebildete Gehäuse vor Verunreinigungen und/oder vor Schmiermittelaustritt zu schützen, können axial außerhalb der Lageranordnung zwischen der Faserverbundwelle und dem Faserverbundlagergehäuse Dichtungen vorgesehen sein, um die Lageranordnung zwischen Welle und Lagergehäuse abzudichten.

Nachdem durch Ausführungsbeispiele der vorliegenden Erfindung auch Lagersystem- bzw. Lagerkomplettlösungen, insbesondere für Kleinwindkraftanlagen, zur Verfügung gestellt werden sollen, können an dem ersten und/oder dem zweiten Faserverbundwickelrohr, d.h. der Welle und/oder dem Gehäuse, bereits bei Auslieferung Lagerringe der Lageranordnung oder Befestigungsmittel angeordnet sein. In diesem Zusammenhang können unter Befestigungsmitteln beispielsweise Wellen- oder Gehäuseabsätze, Sicherungsringe, Befestigungselemente, z. B. für Flügel einer Kleinwindkraftanlage, ein Flansch oder ein Standfuß zur Befestigung der Lagervorrichtung, etc., verstanden werden.

Bei bevorzugten Ausführungsbeispielen können Lagerringe oder derartige Befestigungsmittel durch Einwickeln des Lagerrings und/oder des Befestigungsmittels in das erste und oder das zweite Wickelrohr auf diesem fixiert angeordnet werden. D.h., Lagerringe und/oder Befestigungsmittel können bei der Herstellung der Wickelrohre in eine Außenwand des Wickelrohrs durch entsprechende Überlappungen der Komponentenfasern mit eingewickelt und somit form- und/oder kraftschlüssig mit den Wickelrohren verbunden werden.

Gemäß anderen Ausführungsbeispielen kann zum Befestigen der Lagerringe und/oder der Befestigungsmittel auch ein Elastomer vorgesehen sein, mit welchen die Lagerringe oder die Befestigungsmittel auf den Wickelrohren fixiert werden. Dadurch kann eine Entkopplung von Lagerringen bzw. Befestigungselementen und der gewickelten Welle bzw. dem gewickelten Lagergehäuse erreicht werden, was zu einer vorteilhaften Vibrations- und/oder Geräuschreduzierung führen kann.

Gemäß noch weiteren Ausführungsbeispielen können die Lagerringe bzw. die Befestigungselemente auch auf die Wickelrohre geklebt werden um sie darauf zu fixieren. Das Ein- bzw. Aufkleben der Komponenten stellt eine besonders aufwandsgünstige Montagevariante für eine komplette Lagervorrichtung, bestehend aus gewickelter Welle, gewickeltem Gehäuse, Lageranordnung und Befestigungsmittel, dar.

Gemäß manchen Ausführungsbeispielen kann die Lagervorrichtung als Stehlagerung ausgebildet sein, wobei an dem durch das erste Wickelrohr gebildete Gehäuse als Befestigungsmittel wenigstens ein Standfuß für die Stehlagerung angebracht ist. Dies kann wiederrum durch Einwickeln, mittels Elastomer oder Verkleben erfolgen.

Weitere Ausführungsbeispiele und vorteilhafte Weiterbildungen sind Gegenstand der abhängigen Ansprüche und der nachfolgenden detaillierten Beschreibung der beiliegenden Figuren.

Durch Ausführungsbeispiele der vorliegenden Erfindung kann eine komplette Lagergehäuse-Fertiglösung, insbesondere für Kleinwindanlagen, angeboten werden, welche sich durch integrierte und gekoppelte Bauteile auszeichnet. Ein herkömmlicherweise üblicher Montageaufwand für Lagersysteme kann durch Ausführungsbeispiele erheblich verringert werden. Es kommt zu einer Reduzierung einzelner gelieferter Bauteile. Ein durch Ausführungsbeispiele bereitgestelltes Lagersystem ist durch seine Bauweise schwingungs-, vibrations- und/oder geräuscharm und außerdem korrosionsbeständig und leicht. Das Lagersystem bzw. die -vorrichtung kann in verschiedenen Ausbaustufen, d.h. mit an Nutzerbedürfnisse angepassten Ausstattungsmerkmalen, bereitgestellt werden. Es ist also möglich, eine Art Baukastensystem für Lagersysteme anzubieten.

Ausführungsbeispiele der vorliegenden Erfindung werden nachfolgend bezugnehmend auf die beiliegenden Figuren näher erläutert. Es zeigen:
- Fig. 1: einen schematischen Längsschnitt durch eine Lagervorrichtung gemäß einem Ausführungsbeispiel;
- Fig. 2: einen schematischen Längsschnitt durch eine Lagervorrichtung mit in das Lagergehäuse eingewickelten Befestigungselementen, gemäß einem Ausführungsbeispiel;
- Fig. 3a: eine erste mögliche Draufsicht auf die Lageranordnung gemäß Fig. 2;
- Fig. 3b: eine Draufsicht auf eine weitere Ausführungsform der Lagervorrichtung gemäß Fig. 2;
- Fig. 4a: eine schematische Darstellung eines in ein Wickelrohr eingewickelten Lagerrings gemäß einem Ausführungsbeispiel;
- Fig. 4b: eine schematische Darstellung eines mittels eines Elastomers oder Klebers auf einem Wickelrohr befestigten Laufrings, gemäß einem Ausführungsbeispiel;
- Fig. 5a: einen Längsschnitt durch eine Lagervorrichtung mit einem stirnseitig in das Lagergehäuse eingewickelten Befestigungsflansch, gemäß einem Ausführungsbeispiel;
- Fig. 5b: einen schematischen Längsschnitt mit einem stirnseitig an dem Lagergehäuse verklebten oder mittels eines Elastomers befestigten Befestigungsflansch, gemäß einem Ausführungsbeispiel;
- Fig. 5c: einen schematischen Längsschnitt durch eine Lagervorrichtung mit einem stirnseitig angebrachten Befestigungsflansch gemäß einem weiteren Ausführungsbeispiel; und
- Fig. 6: einen schematischen Querschnitt einer Lagervorrichtung mit an dem Lagergehäuse angebrachten Standfüßen für eine Stehlagerung.

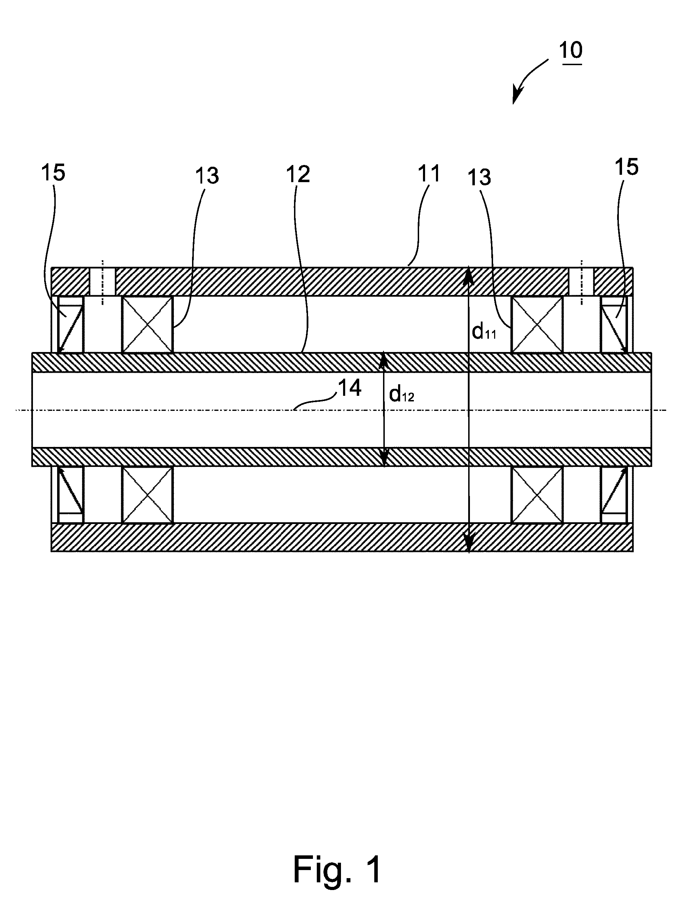

Die Fig. 1 zeigt einen schematischen Längsschnitt durch eine Lagervorrichtung 10 gemäß einem Ausführungsbeispiel der vorliegenden Erfindung.

Die Lagervorrichtung 10 umfasst ein aus einem ersten Wickelrohr mit einem ersten Durchmesser d₁₁ gebildetes Lagergehäuse 11. Ferner umfasst die Lagervorrichtung 10 eine aus einem zweiten Wickelrohr mit einem zweiten Durchmesser d₁₂ gebildete Welle 12. Um die Welle 12 in dem gewickelten Lagergehäuse 11 aufnehmen zu können, ist der zweite Durchmesser d₁₂ geringer als der erste Durchmesser d₁₁, d.h. d₁₂ < d₁₁. Zwischen der gewickelten Welle 12 und dem gewickelten Lagergehäuse 11 ist eine Lageranordnung 13 vorgesehen, die ausgebildet ist, um die gewickelte Welle 12 und das gewickelte Lagergehäuse 11 drehbar zueinander zu lagern.

Wie es aus der Fig. 1 zu erkennen ist, bildet das als Lagergehäuse fungierende erste Wickelrohr 11 eine Art Lagerbuchse zum Aufnehmen der aus dem zweiten Wickelrohr 12 gebildeten Welle. Die beiden Wickelrohre 11 und 12 sind gemäß Ausführungsbeispielen jeweils Faserverbundrohre. Gemäß Ausführungsbeispielen können sie jeweils einen glasfaser- (GFK) und/oder kohlefaserverstärkten Kunststoff (CFK) umfassen. D.h., die Wickelrohre 11, 12 umfassen gemäß Ausführungsbeispielen duroplastische Werkstoffe (Duroplaste bzw. Duromere), die beispielsweise zu hervorragenden Härte- bzw. Festigkeitseigenschaften bei gleichzeitig geringem Gewicht der Rohre 11, 12, und damit auch der gesamten Lagervorrichtung 10, beitragen können. Ein weiterer Vorteil der aus GFK bzw. CFK gewickelten Rohre 11 und 12 besteht in ihrer Korrosionsbeständigkeit gegenüber herkömmlichen, oft metallischen Lagervorrichtung. Diese Vorteile können insbesondere für Windkraftanlagen ausgenutzt werden, bei denen es oft auf Leichtigkeit und/oder Korrosionsbeständigkeit ankommt. Die gewickelten Faserverbundrohre 11 und 12 weisen gegenüber herkömmlichen Lagervorrichtung zusätzlich verbesserte Vibrationseigenschaften auf und können auch zu einer Geräuschreduzierung während eines Betriebs beitragen.

Bei der lediglich schematisch dargestellten Lageranordnung 13 zwischen der gewickelten Welle 12 und dem gewickelten Lagergehäuse 11 kann es sich gemäß Ausführungsbeispielen sowohl um eine Gleit- als auch um eine Wälzlageranordnung handeln. D.h., die Lageranordnung 13 kann auf bzw. in den Wickelrohren 11, 12 angebracht werden und - je nach Ausführungsform - Gleit- und/oder Laufflächen für Wälzkörper (z. B. Kugeln, Zylinderrollen, etc.) aufweisen. Dazu kann auf dem als Welle fungierenden inneren Wickelrohr 12 beispielsweise wenigstens ein Lagerinnenring angebracht sein, wohingegen auf einer inneren Mantelfläche des als Gehäuse fungierenden ersten Wickelrohrs 11 wenigsten ein korrespondierender Lageraußenring befestigt werden kann. Durch die Lageranordnung 13 werden Lagerbuchse 11 und Welle 12 relativ zueinander drehbar um eine Rotationsachse 14.

Je nach Ausführungsform kann in dem durch die Lageranordnung 13 hervorgerufenen Zwischenraum zwischen Welle 12 und Lagergehäuse 11 auch Schmiermittel, z.B. in Form von Öl oder Fett, angeordnet sein. Für einen solchen Fall sehen Ausführungsbeispiele der vorliegenden Erfindung axial (d.h. entlang der Rotationsachse 14) außen liegend zu der Lageranordnung 13 zwischen dem als Welle ausgebildeten zweiten Wickelrohr 12 und dem als Lagergehäuse ausgebildeten ersten Wickelrohr 11 optional wenigstens eine Dichtung 15 vor, um die Lageranordnung 13 sowohl axial nach innen als auch axial nach außen hin abzudichten.

Es ist eine Besonderheit der vorliegenden Erfindung, dass ein Nutzer der Lagervorrichtung 10 einzelne Komponenten der Lagervorrichtung 10 nicht selbst montieren muss, um die komplette Lagervorrichtung 10 zu erhalten, sondern dass dem Nutzer ein fertig montiertes bzw. vormontiertes Lagersystem zur Verfügung gestellt werden kann, bei dem an den ersten und/oder dem zweiten Wickelrohr 11, 12 Komponenten der Lageranordnung 13, wie z. B. Lagerringe und/oder Dichtungen, oder sonstige Befestigungsmittel bereits vormontiert angeordnet sind. Dabei kann es sich um Befestigungsmittel handeln, die sowohl der Befestigung der Lagervorrichtung 10, beispielsweise an einem Trägerbauteil für die Lagervorrichtung 10, dienen, als auch um Befestigungsmittel zum Befestigen weiterer Komponenten an der Lagervorrichtung 10, wie z. B. Flügel für eine Windkraftanlage.

Gemäß Ausführungsbeispielen der vorliegenden Erfindung können derartige Komponenten bereits vorteilhaft bei der Fertigung der Wickelrohre 11, 12 an diesen angebracht werden. Gemäß einem bevorzugten Ausführungsbeispiel können Komponenten, wie z. B. Lagerringe, Dichtungen, und/oder Befestigungsmittel, durch Einwickeln der jeweiligen Komponenten in das erste und/oder das zweite Wickelrohr 11, 12 auf diesen fixiert angeordnet werden. D. h., bereits bei einer Herstellung der Wickelrohre 11, 12 können zusätzliche Komponenten, wie Lagerringe oder Befestigungsmittel, direkt mit in die Wände bzw. Mantelflächen der Wickelrohre 11, 12 eingewickelt werden, was für den Nutzer der Lagervorrichtung 10 einen reduzierten Montageaufwand zur Folge hat. Gleichzeitig wird durch das Einwickeln eine feste, strapazierfähige, kraft- und/oder formschlüssige Verbindung von zusätzlichen Komponenten an einem Wickelrohr 11, 12 erzielt.

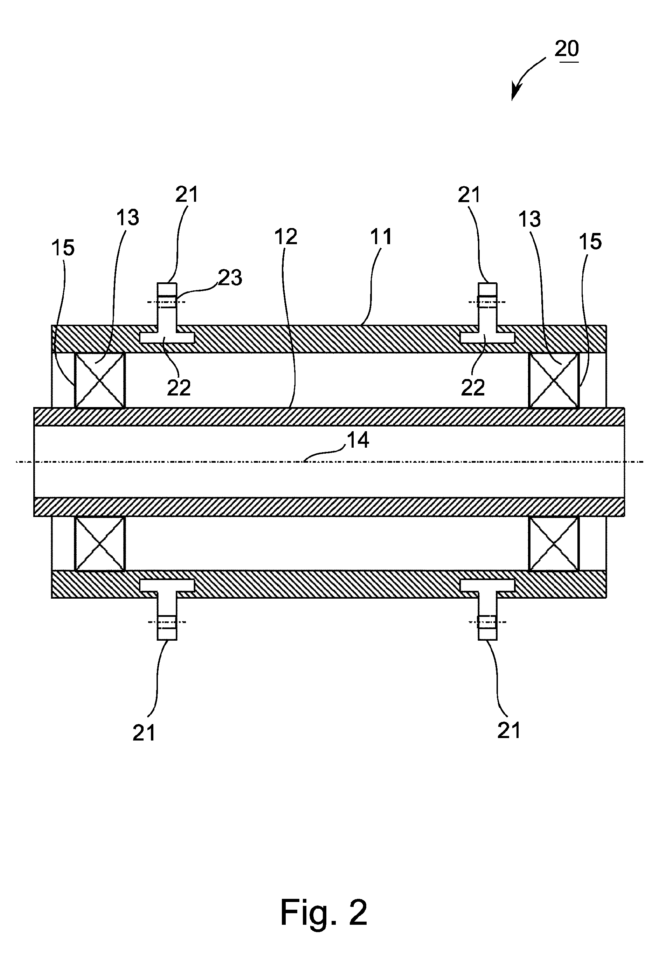

Dazu zeigt Fig. 2 einen schematischen Längsschnitt durch ein Ausführungsbeispiel einer Lagervorrichtung 20. Gleiche Bezugszeichen wie in Fig. 1 bedeuten dabei im Folgenden gleiche oder ähnliche Funktionselemente, auf die im Nachfolgenden zur besseren Übersicht nicht nochmals vertieft eingegangen wird.

Ein Unterschied der beiden Lagervorrichtungen 10 (siehe Fig.1) und 20 (siehe Fig. 2) besteht darin, dass die Lagervorrichtung 20 an dem als Lagergehäuse fungierenden ersten Wickelrohr 11 zusätzliche Befestigungsmittel 21 vorsieht, die beispielsweise einer Befestigung von Flügeln einer Windkraftanlage an dem gewickelten CFK-/GFK-Lagergehäuse 11 dienen können. Bei dem Ausführungsbeispiel gemäß Fig. 2 kann sich somit das erste Wickelrohr 11 gegenüber dem zweiten Wickelrohr 12 verdrehen. Die ringförmig in Umfangsrichtung angeordneten Befestigungsmittel 21 sind gemäß dem in Fig. 2 dargestellten Ausführungsbeispiel vorteilhaft in die Wand bzw. Mantelfläche des ersten Wickelrohrs 11 eingewickelt, so dass ein radial innenliegender Halteabschnitt 22 der ringförmigen Befestigungselemente 21 von dem Faserverbundwerkstoff (CFK und/oder GFK) des Wickelrohrs 11 formschlüssig umgeben ist. Für eine effiziente Kopplung der Befestigungsmittel 21 mit dem Wickelrohr 11 ist der radial innenliegende Halteabschnitt 22 beispielsweise T-förmig ausgebildet, so dass der T-förmige Abschnitt 22 beim Einwickeln gut von dem Faserverbundwerkstoff überlagert werden kann.

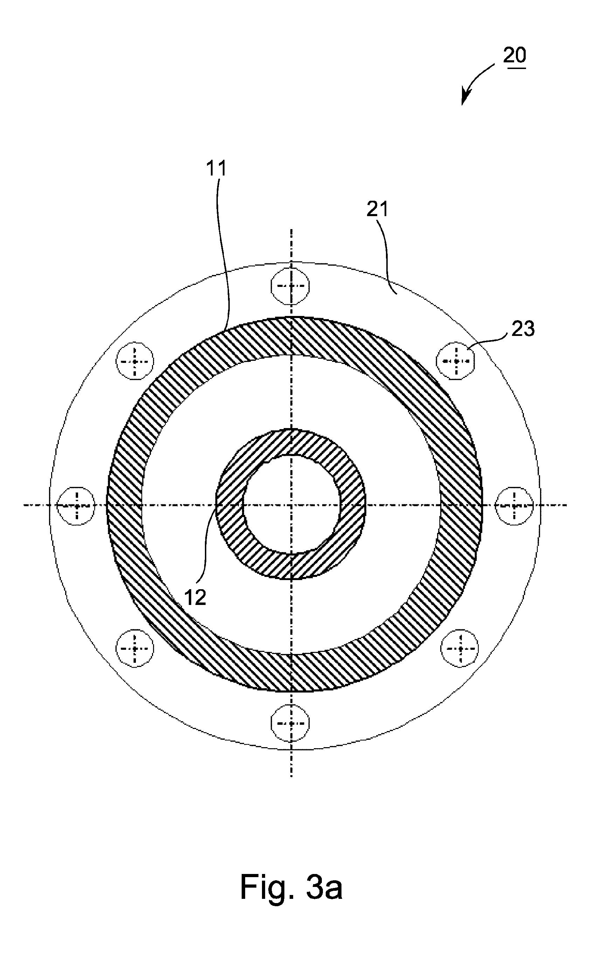

Eine Frontal- bzw. Draufsicht auf die Lagervorrichtung 20 ist in der Fig. 3a gezeigt.

In dieser Darstellung lässt sich ein mit dessen Halteabschnitt 22 (nicht gezeigt) in das Wickelrohr 11 eingewickeltes ringförmiges Befestigungselement 21 mit darin in Umfangsrichtung angeordneten Befestigungsbohrungen 23 erkennen, mittels derer beispielsweise Flügel für eine Windkraftanlage mit dem Faserverbundlagergehäuse 11 gekoppelt werden können. Dabei kann das ringförmige Befestigungselement 21 aus einem Material bestehen, dass an Anforderungen angepasst ist, welche durch ein daran zu befestigendes Teil gestellt werden. Beispielsweise könnte der Befestigungsring 21 gemäß manchen Ausführungsbeispielen aus einem gehärteten Stahl bestehen.

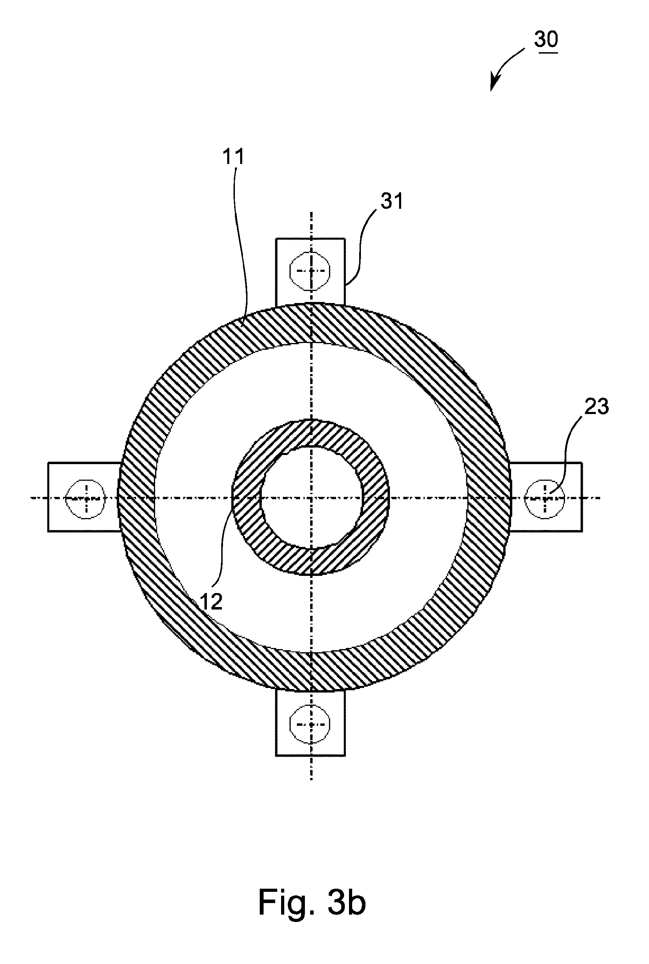

Eine weitere Alternative zur Anbringung von in Umfangsrichtung angeordneter Befestigungselemente 31 an dem gewickelten Lagergehäuse 11 ist in der Draufsicht der Fig. 3b dargestellt.

Bei den hier dargestellten vier, jeweils um einen 90°-Winkel versetzt, in die Außenwand des ersten Wickelrohrs 11 eingewickelten Befestigungselementen 31 handelt es sich um eine alternative Ausführungsform zu Fig. 3a, bei der die Befestigungselemente 31 nicht vollumfänglich in das Wickelrohr 11 eingewickelt sind, sondern lediglich an um jeweils 90° versetzten Positionen, wobei hier der 90°-Winkel beispielhaft zu verstehen ist. Durch eine derartige Ausführungsform kann u. U. zusätzlich Gewicht eingespart werden, wenn der Einsatzzweck nicht zwingend eine umlaufende Anordnung von Befestigungsbohrungen, wie in Fig. 2, vorschreibt.

Beiden Ausführungsformen der Fig. 3a und 3b ist jedoch gemein, dass die Befestigungselemente 21, 31 jeweils bei der Herstellung des Wickelrohres 11 in bzw. an dieses integriert werden, so dass sie später nicht mehr aufwändig montiert werden müssen. Generell sind natürlich auch andere Befestigungsmethoden, wie z. B. Aufschrumpfen, Verkleben, Verschrauben, o.ä., möglich. Aber gerade im Hinblick auf nicht stirnseitig in Umfangsrichtung angeordnete Befestigungsmittel, wie in den Fig. 2 bis Fig. 3b gezeigt, stellt das Einwickeln in die Wickelrohre 11, 12 eine besonders vorteilhafte Alternative dar.

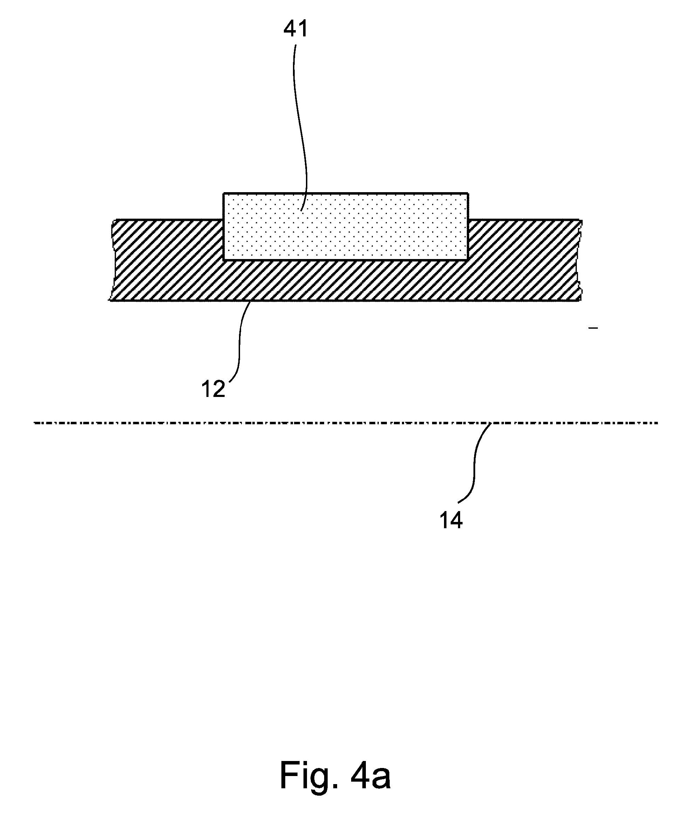

Fig. 4a zeigt in vergrößernder Ansicht einen Ausschnitt der Mantelfläche des als Welle ausgebildeten zweiten Wickelrohrs 12 mit einem in die Mantelfläche eingewickelten Lager(innen)ring 41 der Lageranordnung 13.

Obwohl der Lagerring 41 auch durch herkömmliche Verfahren, wie z. B. mittels Sicherungsringen und/oder Wellenabsätzen, auf der gewickelten Welle 12 fixiert werden könnte, stellt das Einwickeln des Lagerrings 41 in die Mantelfläche des Wickelrohrs 12 ein bevorzugtes Ausführungsbeispiel dar, da sich diese Art der Befestigung von Lagerkomponenten auf oder in den Wickelrohren 11, 12 in synergistischer Weise mit deren Bauart als Wickelrohre kombinieren lässt. Bereits bei der Herstellung der Wickelrohre 11, 12 können somit Komponenten der Lageranordnung 13 und/oder andere Befestigungselemente oder Dichtungen vorteilhaft auf den Wickelrohren fixiert werden. Die so fixierten Komponenten, wie z. B. der Lagerring 41, können auf diese Weise eine stabile und formschlüssige Verbindung mit den Wickelrohren 11, 12 eingehen.

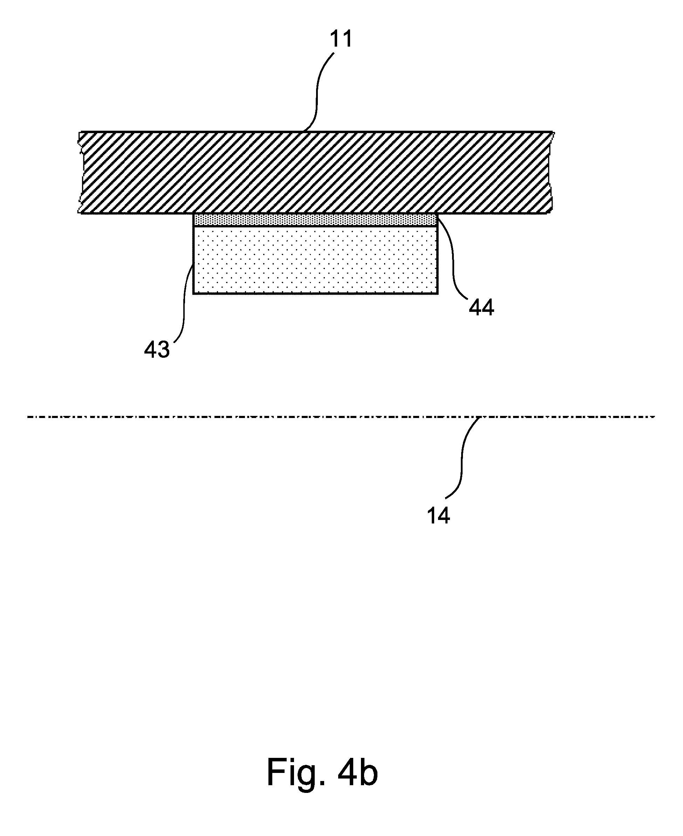

Fig. 4b zeigt eine weitere Verbindungsvariante von Komponenten der Lagervorrichtung mit den Wickelrohren 11, 12.

Ausgehend von der Position der Rotationsachse 14 handelt es sich bei Fig. 4b um eine vergrößerte Ansicht des als Lagergehäuse ausgebildeten ersten Wickelrohrs 11, auf dessen Innenseite ein Lageraußenring 43 mittels eines Elastomers 44 fixiert ist. In anderen Worten ausgedrückt kann der Lageraußenring 43 gemäß Ausführungsbeispielen mittels Einspritzen eines Elastomers 44 zwischen den Lageraußenring 43 und die Oberfläche des Wickelrohrs 11 auf bzw. in diesem fixiert werden. Alternativ zu dem Elastomer 44 könnte auch ein Ein- oder Verkleben des Lageraußenrings 43 mittels eines Klebers stattfinden. Durch den Einsatz von Elastomeren, d. h. festen aber elastisch verformbaren Kunststoffen, welche sich bei Zug- und/oder Druckbelastung elastisch verformen können, danach aber wieder in ihre ursprüngliche, unverformte Gestalt zurückfinden, kann insbesondere eine Entkopplung von Lagervorrichtungskomponenten (wie z. B. dem Lageraußenring 43) von der gewickelten Welle 12 bzw. dem gewickelten Lagergehäuse 11 erreicht werden. In dem in Fig. 4b gezeigten Beispiel sind der Lagerring 43 und das Wickelrohr 12 durch die elastomere Schicht 44 derart gekoppelt, sodass es insbesondere bei Belastung einer um die Achse 14 rotierenden Lagervorrichtung 10, 20 zu einer Reduzierung von Vibrationen und Geräuschen kommen kann.

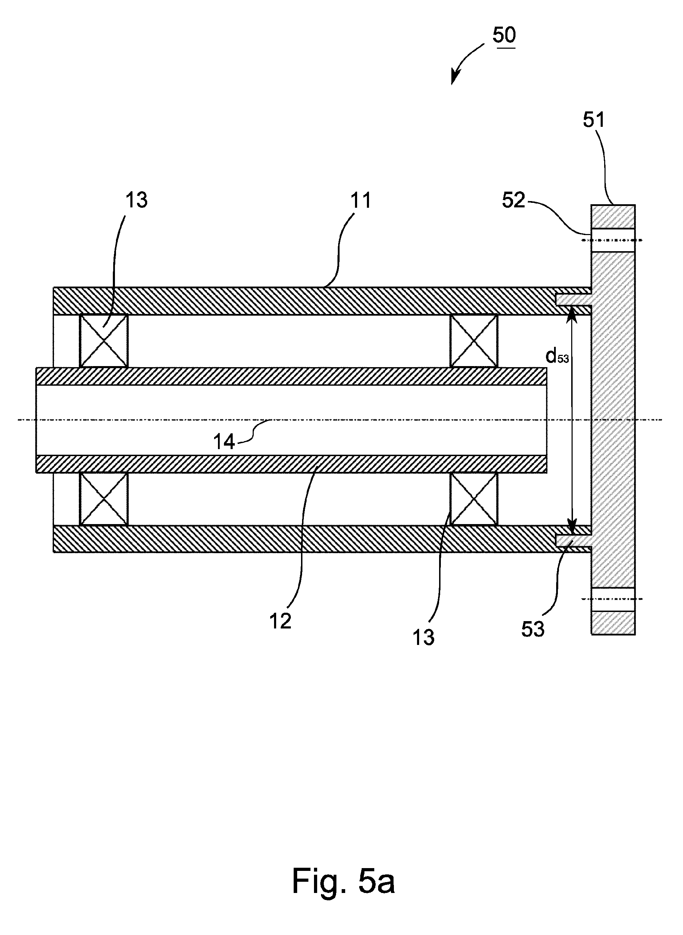

Fig. 5a zeigt einen schematischen Längsschnitt durch eine Lagervorrichtung 50, welche in ihrem grundlegenden Aufbau den bereits vorher beschriebenen Lageranordnungen 10 und 20 entspricht, an deren Stirnseite jedoch ein Befestigungsmittel in Form eines Flanschs 51 mit darin angebrachten Befestigungsbohrungen 52 vorgesehen ist.

Der Flansch 51 weist für dessen Befestigung an der Stirnseite des gewickelten Lagergehäuses 11 einen ringförmigen Vorsprung 53 auf, dessen Durchmesser d₅₃ in etwa dem Durchmesser d₁₁ des als Lagergehäuse fungierenden ersten Wickelrohrs 11 entspricht. Eine Wandstärke des umlaufenden Vorsprungs 53 ist aber geringer als die Wandstärke des Wickelrohrs 11, so dass bereits bei einer Herstellung des Wickelrohrs 11 der umlaufende Vorsprung 53, und damit der Befestigungsflansch 51, durch Einwickeln verliersicher stirnseitig an das Wickelrohr 11 angekoppelt werden kann. Auch hier stellt das Einwickeln eine effiziente und einfache Kopplungsvariante für das Befestigungselement 51 mit dem Wickelrohr 11 dar. Mittels des Befestigungsflanschs 51 kann die gesamte Lagervorrichtung 50 über die Befestigungsbohrungen 52 beispielsweise an einer Wand, auf einem Mast oder Ständer, auf dem Boden oder dergleichen befestigt werden.

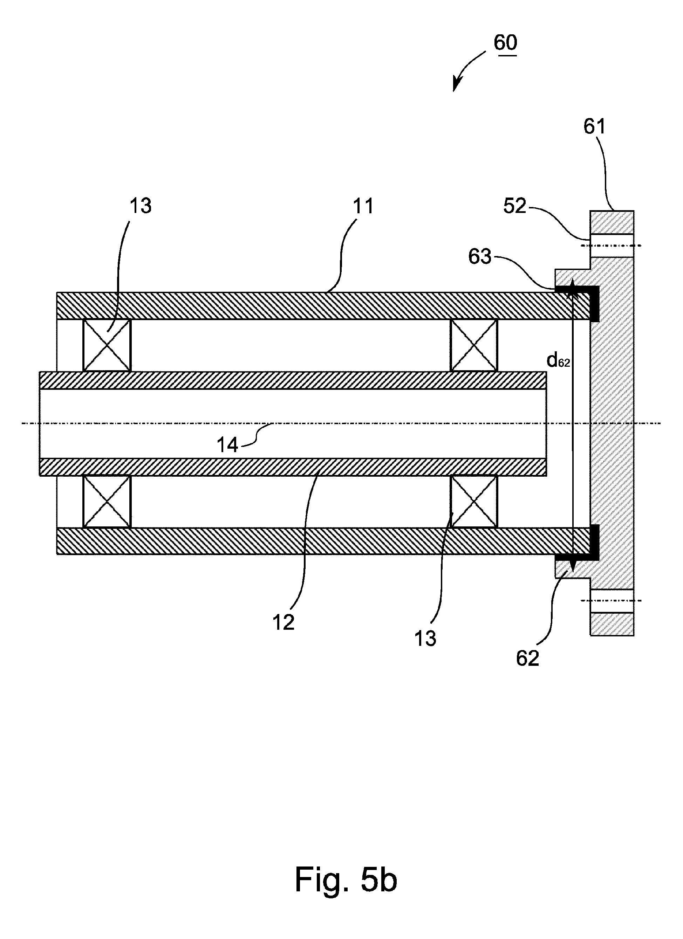

Die Fig. 5b zeigt eine Ausführungsform einer Lagervorrichtung 60, wobei an dem als Lagergehäuse wirkenden ersten Wickelrohr 11 ein Befestigungsmittel in Form eines Flanschs 61 vermittels einer elastomeren Kopplungsschicht 63 stirnseitig mit dem Wickelrohr 11 gekoppelt ist.

Ähnlich wie bei dem anhand von Fig. 4b beschriebenem Ausführungsbeispiel, ist hier zwischen dem Befestigungselement bzw. -mittel 61 und einer Oberfläche des Wickelrohrs 11, an dem das Befestigungselement 61 angeordnet ist, ein Elastomer 63 vorgesehen, um das Befestigungselement 61 an dem Wickelrohr 11 zu fixieren. Unter dem Bezugszeichen 63 kann aber gemäß anderen Ausführungsbeispielen auch ein Kleber verstanden werden. Dazu kann ein an dem Flansch 61 gebildeter ringförmiger Vorsprung 62 einen geringfügig größeren Durchmesser d₆₂ als der Außendurchmesser des ersten Wickelrohrs 11 aufweisen. In einem sich daraus ergebenden kleinen Spalt zwischen dem ringförmig um das Wickelrohr 11 umlaufenden Vorsprung 62 und dem Wickelrohr 11 kann zur Fixierung des Flanschs 61 das Elastomer bzw. der Kleber 63 eingespritzt werden, wodurch es wiederum zu einer im Vorhergehenden bereits beschriebenen vorteilhaften vibrations- und/oder geräuschmäßigen Entkopplung zwischen dem Befestigungsmittel 61 und dem gewickelten Lagergehäuse 11 kommt.

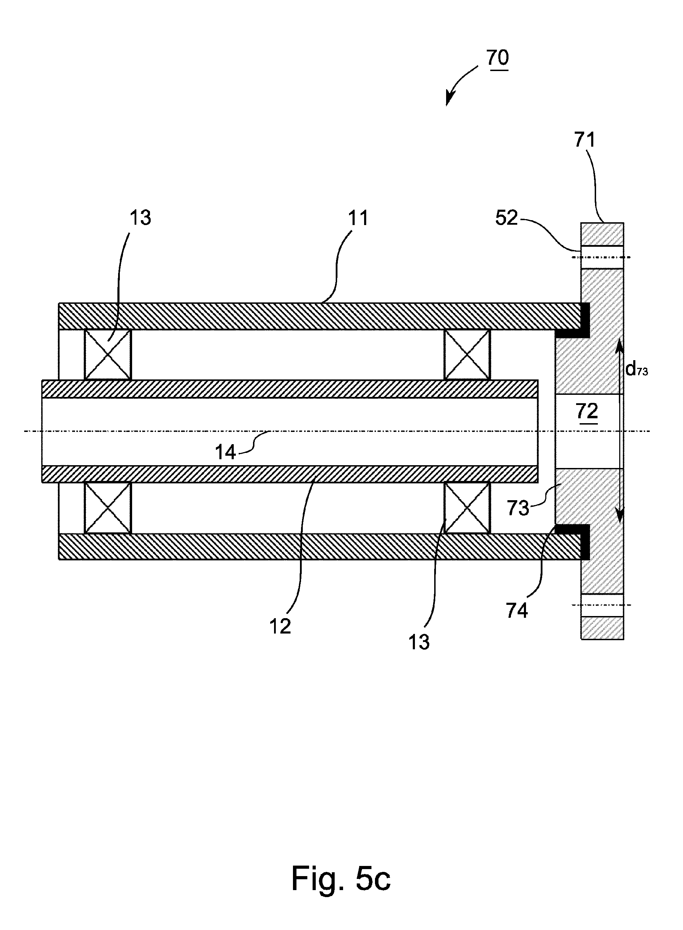

In Fig. 5c ist eine Ausführungsform einer Lageranordnung 70 gezeigt, wobei an dem gewickelten Lagergehäuse 11 stirnseitig ein Befestigungsflansch 71 mit Befestigungsbohrungen 52 und einer zentralen Öffnung 72 an das Lagergehäuse 11 angeklebt ist.

Dazu weist der Befestigungsflansch 71 in einem radialen Bereich 73 um die Öffnung 72 herum eine größere axiale Ausdehnung auf, als in radial weiter außen liegenden Endbereichen des Befestigungsflanschs 71. Der innenliegende ringförmige und axial verstärkt ausgebildete Bereich 73 des Befestigungsflanschs 71 weist dabei einen Durchmesser d₇₃ auf, der geringfügig kleiner ist als ein Innendurchmesser des gewickelten Lagergehäuses 11. Somit kann der Befestigungsflansch 71 mit dem axial vorstehenden Bereich 73 in das rohrförmige gewickelte Lagergehäuse 11 eingebracht werden und mit diesem mittels eines Klebers 73 stirnseitig verklebt werden. Eine Kopplung mittels eines Elastomers ist aber ebenso denkbar. Ähnlich wie beim Einwickeln (siehe Fign. 3a, 3b, 4a, 5a) oder bei einer Verbindung mit einem Elastomer (siehe Fign. 4b, 5b

), stellt das Verkleben von Komponenten, wie z. B. Lagerringen oder Befestigungsmitteln, eine aufwandsgünstige Befestigungsmöglichkeit mit einem reduzierten Montageaufwand für den Nutzer der Lagervorrichtung bzw. des Lagersystems dar.

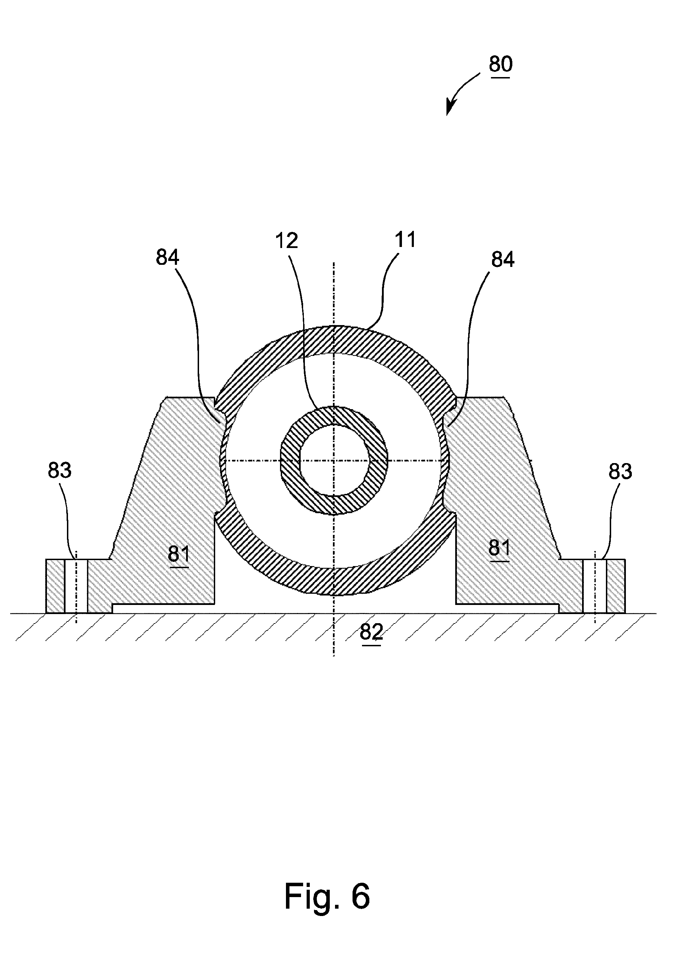

Fig. 6 zeigt einen Querschnitt durch eine weitere Ausführungsform einer Lagervorrichtung 80, welche als Stehlagerung ausgebildet ist und bei der an dem durch das erste Wickelrohr 11 gebildete Gehäuse als Befestigungsmittel wenigstens ein Standfuß 81 angebracht ist. Durch die Standfüße 81 kann die Lagervorrichtung 80 beispielsweise für horizontale Kleinwindanlagen benutzt werden.

Zur Befestigung auf einem Boden 82 kann der Standfuß 81 Montagebohrungen 83 aufweisen. Auch bei dem als Stehlagerung ausgebildeten Ausführungsbeispiel der Lagervorrichtung 80 können die links- und rechtsseitig angebrachten Standfüße 81 jeweils durch Einwickeln von entsprechenden Koppelabschnitten 84 der Standfüße 81 in die Außenwand des Wickelrohrs 11 mit diesem verkoppelt sein. Alternativ können natürlich auch andere im Vorhergehenden beschriebene Verbindungstechniken, wie z. B. Kleben oder Elastomere, vorgesehen sein, um die Standfüße 81 mit dem gewickelten Lagergehäuse 11 zu koppeln.

Ausführungsbeispiele schaffen also ein Konzept zum Bereitstellen einer Lagervorrichtung, insbesondere für eine Windkraftanlage, mit einem Schritt des Bereitstellens eines aus einem ersten Wickelrohr 11 mit einem ersten Durchmesser gebildeten Lagergehäuses, einem Schritt des Bereitstellens einer aus einem zweiten Wickelrohr 12 mit einem zweiten Durchmesser gebildeten Welle, wobei der zweite Durchmesser geringer ist als der erste Durchmesser, und einem Schritt des Anbringens, an der Welle 12 und/oder dem Lagergehäuse 11, einer Lageranordnung 13, die ausgebildet ist, um die Welle 12 und das Lagergehäuse 11 drehbar zueinander zu lagern. Zusätzlich können weitere Komponenten an das Lagergehäuse und/oder die Welle angebracht werden, wie es im Vorhergehenden beschrieben wurde.

Insgesamt kann durch Ausführungsbeispiele der vorliegenden Erfindung eine komplette Lagergehäuse-Fertiglösung, insbesondere für Kleinwindanlagen, angeboten werden. Ausführungsbeispiele der Lagervorrichtung zeichnen sich durch integrierte und gekoppelte Bauteile aus, insbesondere durch die im Vorhergehenden beschriebene Wickeltechnik. Durch die beschriebene Vorabmontage von Komponenten bereits bei einer Herstellung der Welle 12 bzw. des Gehäuses 11 lässt sich ein späterer Montageaufwand für hier beschriebene Lagervorrichtungen bzw. -systeme erheblich verringern. Es kann eine Anzahl der zur Montage benötigten Bauteile verringert werden. Des Weiteren können Ausführungsbeispiele schwingungs-, vibrations- und/oder geräuscharm und außerdem korrosionsbeständig und leicht ausgeführt werden, was in der Folge wiederum zu einer Kostenreduktion beitragen kann. Des Weiteren wird es durch Ausführungsbeispiele möglich, gerade für Lagersysteme eine Art Baukastensystem anzubieten.

### Bezugszeichenliste

- 10: Lagervorrichtung gemäß einem Ausführungsbeispiel
- 11: erstes Wickelrohr, Lagergehäuse
- 12: zweites Wickelrohr, Welle
- 13: Lageranordnung
- 14: Rotationsachse
- 15: Dichtung
- 20: Lagervorrichtung gemäß einem Ausführungsbeispiel
- 21: umlaufendes Befestigungsmittel für z.B. Windflügel
- 22: Halteabschnitt zum Einwickeln
- 23: Halte- bzw. Befestigungsbohrungen
- 30: Lagervorrichtung gemäß einem Ausführungsbeispiel
- 31: Befestigungselement für z.B. Windflügel
- 41: Lagerinnenring
- 43: Lageraußenring
- 44: elastomere Verbindungsschicht
- 50: Lagervorrichtung gemäß einem Ausführungsbeispiel
- 51: Befestigungsmittel, Flansch
- 52: Befestigungsbohrungen
- 53: Haltevorsprung zum Einwickeln
- 60: Lagervorrichtung gemäß einem Ausführungsbeispiel
- 61: Befestigungsmittel, Flansch
- 62: Haltevorsprung
- 63: elastomere Verbindungsschicht
- 70: Lagervorrichtung gemäß einem Ausführungsbeispiel
- 71: Befestigungsmittel, Flansch
- 72: Bohrung für Welle
- 73: axial verstärkter Abschnitt des Flansches
- 74: Kleber
- 80: Lagervorrichtung gemäß einem Ausführungsbeispiel
- 81: Standfuß
- 82: Boden
- 83: Haltebohrung
- 84: Kopplungsabschnitt

## Patentansprüche

1. Eine Lagervorrichtung (10; 20; 30; 50; 60; 70; 80), insbesondere für eine Windkraftanlage, umfassend:
ein aus einem ersten Wickelrohr (11) mit einem ersten Durchmesser gebildetes Lagergehäuse;
eine aus einem zweiten Wickelrohr (12) mit einem zweiten Durchmesser gebildete Welle, wobei der zweite Durchmesser geringer ist als der erste Durchmesser, so dass die Welle (12) in das Lagergehäuse (11) eingebracht werden kann; und
eine Lageranordnung (13) zwischen Welle und Lagergehäuse, die ausgebildet ist, um die Welle und das Lagergehäuse drehbar zueinander zu lagern.

2. Die Lagervorrichtung (10; 20; 30; 50; 60; 70; 80) nach Anspruch 1, wobei das erste und/oder das zweite Wickelrohr (11; 12) ein Faserverbundrohr ist, welches einen glasfaser- und/oder kohlefaserverstärkten Kunststoff umfasst.

3. Die Lagervorrichtung (10; 20; 30; 50; 60; 70; 80) nach einem der vorhergehenden Ansprüche, wobei die Lageranordnung (13) zwischen der Welle und dem Lagergehäuse als Gleitlager oder als Wälzlager ausgebildet ist.

4. Die Lagervorrichtung (10; 20; 30; 50; 60; 70; 80) nach einem der vorhergehenden Ansprüche, wobei an dem ersten und/oder dem zweiten Wickelrohr (11; 12) wenigstens ein Lagerring (41; 43) der Lageranordnung (13) und/oder ein Befestigungsmittel (21; 31; 51; 61; 71; 81) angeordnet ist.

5. Die Lagervorrichtung (10; 20; 30; 50; 60; 70; 80) nach Anspruch 4, wobei der Lagerring (41) und/oder das Befestigungsmittel (21; 31; 51; 81) durch Einwickeln des Lagerrings (41) und/oder des Befestigungsmittels (21; 31; 51; 81) in das erste und/oder das zweite Wickelrohr (11; 12) auf diesem fixiert angeordnet sind.

6. Die Lagervorrichtung (10; 20; 30; 50; 60; 70; 80) nach Anspruch 4, wobei zwischen dem Lagerring (43) und einer Oberfläche des Wickelrohrs (11; 12), an dem der Lagerring (43) angeordnet ist, ein Elastomer (44) vorgesehen ist, um den Lagerring (43) zu fixieren, oder, wobei zwischen dem Befestigungselement (61) und einer Oberfläche des Wickelrohrs (11), an dem das Befestigungselement (61) angeordnet ist, ein Elastomer (63) vorgesehen ist, um das Befestigungselement (61) zu fixieren.

7. Die Lagervorrichtung (10; 20; 30; 50; 60; 70; 80) nach einem der Ansprüche 4 bis 6, wobei das Befestigungsmittel einen Flansch (51; 61; 71) zur Befestigung der Lagervorrichtung und/oder ein Befestigungselement (21; 31) für einen Flügel einer Windkraftanlage aufweist.

8. Die Lagervorrichtung (10; 20; 30; 50; 60; 70; 80) nach einem der vorhergehenden Ansprüche, wobei zwischen dem als Welle ausgebildeten zweiten Wickelrohr (12) und dem als Lagergehäuse ausgebildeten ersten Wickelrohr (11) eine Dichtung (15) vorgesehen ist, um die Lageranordnung (13) zwischen Welle und Lagergehäuse abzudichten.

9. Die Lagervorrichtung (10; 20; 30; 50; 60; 70; 80) nach einem der vorhergehenden Ansprüche, wobei die Lagervorrichtung als Stehlagerung (80) ausgebildet ist und an dem durch das erste Wickelrohr (11) gebildete Lagergehäuse als Befestigungsmittel wenigstens ein Standfuß (81) angebracht ist.

10. Ein Verfahren zum Bereitstellen einer Lagervorrichtung (10; 20; 30; 50; 60; 70; 80), insbesondere für eine Windkraftanlage, mit folgenden Schritten:
Bereitstellen eines aus einem ersten Wickelrohr (11) mit einem ersten Durchmesser gebildeten Lagergehäuses;
Bereitstellen einer aus einem zweiten Wickelrohr (12) mit einem zweiten Durchmesser gebildeten Welle, wobei der zweite Durchmesser geringer ist als der erste Durchmesser;
Anbringen, an der Welle (12) und/oder dem Lagergehäuse (11), einer Lageranordnung (13), die ausgebildet ist, um die Welle (12) und das Lagergehäuse (11) drehbar zueinander zu lagern.
Einbringen der Welle (12) in das Lagergehäuse (11).
